# EUROPÄISCHE PATENTSCHRIFT

(11) **EP 2 332 868 B1**
(45) Veröffentlichungstag und Bekanntmachung des Hinweises auf die Patenterteilung: **13.02.2013**
(21) Anmeldenummer: 10193608.6
(22) Anmeldetag: 03.12.2010
(51) Int. Cl.: B65G 53/52

(54) **Fördervorrichtung zum pneumatischen Fördern von Schüttgut**
Conveyor for pneumatic conveying of bulk material
Dispositif de transport pour le transport pneumatique de produits en vrac

(30) Priorität: 14.12.2009 DE 102009054596
(43) Veröffentlichungstag der Anmeldung: 15.06.2011
(73) Patentinhaber: Coperion GmbH, 70469 Stuttgart (DE)
(72) Erfinder: Dürr, Michael, 88364 Wolfegg (DE); Ernst, Reinhard, 88250 Weingarten (DE); Lang, Klaus-Peter, 88339 Bad Waldsee (DE); Schwibode, Heiko, 88339 Bad Waldsee (DE); Straub, Friedrich, 88214 Ravensburg (DE); Zechner, Egon, 88250 Weingarten (DE); Kniess, Jochen, 88326 Aulendorf (DE)
(74) Vertreter: Rau, Schneck & Hübner

(56) Entgegenhaltungen:
- DE-B- 1 174 256
- DE-C1- 3 711 122

## Beschreibung

Die Erfindung betrifft eine Vorrichtung zum pneumatischen Fördern von Schüttgut gemäβ dem Oberbegriff des Anspruchs 1. Ferner betrifft die Erfindung eine Förderanlage mit einer derartigen Fördervorrichtung.

Fördervorrichtungen der eingangs genannten Art mit einem Haupt-Förderrohr und einem innerhalb des Haupt-Förderrohrs verlaufend angeordneten Bypass-Förderrohr sind aus einer Reihe von Veröffentlichungen bekannt. Stellvertretend hierfür seien genannt die DE-PS 1 174 256, die DE 37 11 122 C2, die DE-PS 2 102 301 und die EP 1 382 554 B1. Die DE-PS-1174 256 offenbart eine solche Vorrichtung gemäß dem Oberbegriff des Anspruchs 1. Es ist eine Aufgabe der vorliegenden Erfindung, eine Fördervorrichtung der eingangs genannten Art derart weiterzubilden, dass deren Wirkungsgrad, also das Verhältnis aus Förderleistung und eingesetzter Fördergasenergie, also eingesetzter Fördergasmenge beziehungsweise eingesetztem Fördergasdruck, verbessert ist.

Diese Aufgabe ist erfindungsgemäß gelöst durch eine Fördervorrichtung mit den im Anspruch 1 angegebenen Merkmalen.

Erfindungsgemäß wurde erkannt, dass eine gesehen in Schüttgut-Förderrichtung oberhalb der Austrittsöffnung angeordnete Eintrittsöffnung zur Möglichkeit führt, das Fördergas von einem dem Bodenbereich des Haupt-Förderrohrs, in dem im Normalbetrieb das Schüttgut gefördert wird, entfernten Teilvolumen her in die Bypass-Förderrohrabschnitte einströmen zu lassen. Durch diese Anordnung wird vermieden, dass unerwünscht eine größere Menge von Schüttgut über die Eintrittsöffnungen in die Bypass-Förderrohrabschnitte gelangt. Da sich vom Rohrboden des Haupt-Förderrohrs aus gesehen die Eintrittsöffnung der Bypass-Förderrohrabschnitte oberhalb der Austrittsöffnung befindet, wird im Falle einer beginnenden Pfropfenbildung die Eintrittsöffnung von sich sammelndem Schüttgut spät erreicht, was die Pfropfenbildung erschwert, so dass unerwünschte Schüttgut-Agglomerate in der Regel vor dem Erreichen der Eintrittsöffnung der Bypass-Förderrohrabschnitte aufgelöst werden. Eine Verstopfung der Bypass-Förderrohrabschnitte ist auf diese Weise sicher verhindert. Durch die Gestaltung der Bypass-Förderrohrabschnitte kann ein Druckverlust des Fördergases längs der Fördervorrichtung minimiert werden. Insgesamt ergibt sich eine erhöhte Leistungseffizienz der Fördervorrichtung. Das aktive, dauernde Einströmen bzw. Einwirbeln des Fördergases über die Bypass-Förderrohrabschnitte führt zu einem Auffluidisieren des Schüttgutes und vermeidet bzw. verhindert somit ein Ablagern des Schüttgutes am Boden des Haupt-Förderrohrs mit einer daraus unerwünscht resultierenden Pfropfenbildung. Soweit sich doch ein Schüttgutpfropfen im Haupt-Förderrohr gebildet haben sollte, kann das Fördergas durch den Bypass-Förderrohrabschnitt, auf dessen Höhe der Pfropfen sich gebildet hat, am Pfropfen vorbeiströmen und diesen von hinten her auflösen. Da eine Schüttgut-Pfropfenbildung wirkungsvoll verhindert ist, werden hohe Umlenkkräfte vermieden, die ansonsten dadurch entstehen, dass Schüttgut-Stopfen durch die Fördervorrichtung geschoben werden und an Umlenkstellen dadurch aufgrund ihrer Massenträgheit entsprechende Kräfte auf die Fördervorrichtung ausüben. Halterungen der Fördervorrichtung können dann entsprechend geringer dimensioniert ausgeführt sein. Zudem kann ein Fördergas-Druckniveau ausgenutzt werden, ohne dass zu hohe Druckspitzen bzw. Umlenkkräfte auftreten. Die Eintrittsöffnung der Bypass-Förderrohrabschnitte kann von einer zentralen Längsachse des Haupt-Förderrohrs weiter beabstandet sein als die Austrittsöffnung. Die Austrittsöffnung der Bypass-Förderrohrabschnitte kann oberhalb der zentralen Längsachse des Haupt-Förderrohrs oder kann alternativ nahe des Rohrbodens des Haupt-Förderrohrs liegen. Die Eintrittsöffnung der Bypass-Förderrohrabschnitte kann mit gegenüber dem sonstigen Bypass-Förderrohrabschnitt verringertem Innenquerschnitt und kann insbesondere gequetscht ausgeführt sein. Die Austrittsöffnung der Bypass-Förderrohrabschnitte kann beabstandet zu einem Rohrboden des Haupt-Förderrohrs angeordnet sein. Alternativ ist es möglich, die Austrittsöffnung direkt benachbart zum Rohrboden des Haupt-Förderrohrs anzuordnen.

Ein Schrägverlauf der Bypass-Förderrohrabschnitte nach Anspruch 2 begünstigt die Möglichkeit einer Kanalbildung für das Fördergas im Schüttgut, so dass einerseits die Bildung unerwünschter Pfropfen verhindert und andererseits die Auslösung von sich doch gebildeten Pfropfen begünstigt ist. Die Schrägstellung kann dazu genutzt werden, einen Niveauunterschied der Austrittsöffnung relativ zur Eintrittsöffnung zu vergrößern, bei dem die Austrittsöffnung weniger weit vom Rohrboden des Haupt-Förderrohrs beabstandet ist als die Eintrittsöffnung. Die Eintrittsöffnung kann dann von unerwünschten Schüttgut-Agglomeraten bzw. -pfropfen schwer erreicht werden. Die Austrittsöffnung befindet sich in diesem Fall vorteilhaft nahe an der Oberkante des sich ablagernden Schüttgutstromes des Haupt-Förderrohrs, was zu einem schnellen und effektiven Aufwirbeln von Schüttgut führt, das zu einer Ablagerung am Rohrboden neigt. Ein Schrägverlauf der Bypass-Förderrohrabschnitte kann auch zum gezielten Lenken des Fördergases in Richtung auf den Rohrboden des Haupt-Förderrohrs zu genutzt werden, was ein schnelles und effektives Aufwirbeln des Schüttguts weiter begünstigt.

Ein gebogener Rohrverlauf nach Anspruch 3 führt dazu, dass das Fördergas, welches aus der Austrittsöffnung ausströmt, in Richtung auf den Boden des Haupt-Förderrohrs zu gelenkt wird, was ein Fluidisieren von Schüttgutablagerungen am Rohrboden weiter begünstigt. Alternativ zu einem gebogenen Verlauf des Bypass-Förderrohrabschnitts kann auch ein gerader Verlauf des Bypass-Förderrohrabschnitts oder ein im Bereich der Austrittsöffnung auf die zentrale Längsachse zu abgewinkelter Verlauf realisiert sein. Das Bypass-Förderrohr kann im Anschluss an die Eintrittsöffnung zunächst einen geraden Verlauf und im weiteren Verlauf bis zur Austrittsöffnung einen gebogenen Verlauf haben. Ein Längenverhältnis 1_{G}/L zwischen einer Länge 1_{G} eines gerade verlaufenden Bereichs des Bypass-Förderrohrabschnitts nach der Eintrittsöffnung und einer Gesamtlänge L des Bypass-Förderrohrabschnitts im Haupt-Förderrohr kann im Bereich zwischen 0,1 und 0,8 und kann im Bereich zwischen 0,15 und 0,6 liegen.

Der Bypass-Förderrohrabschnitt kann im Verlauf zwischen der Eintrittsöffnung und der Austrittsöffnung zunächst in einem ersten Bereich gerade, anschließend in einem weiteren Bereich gebogen und anschließend in einem weiteren Bereich bis zur Austrittsöffnung wieder gerade verlaufen. In diesem Fall ist der Rohrverlauf des Bypass-Förderrohrabschnitts nach dem gebogenen Zwischenbereich benachbart zur Austrittsöffnung wieder gerade.

Bei einer weiteren Ausführung kann der Rohrverlauf des Bypass-Förderrohrabschnitts zwischen der Eintrittsöffnung und der Austrittsöffnung insgesamt gebogen sein. Bei dieser Variante liegt zwischen der Eintrittsöffnung, gegebenenfalls nach einem gequetschten Bereich, und der Austrittsöffnung also kein gerade verlaufender Bereich des Bypass-Förderrohrabschnitts vor.

Ein gemeinsamer Träger nach Anspruch 4 führt zur Möglichkeit, die Bypass-Förderrohrabschnitte auf den Träger vorzumontieren und den Träger dann mit vormontierten Bypass-Förderrohrabschnitten an der Innenwand des Haupt-Förderrohrs 3 zu fixieren. Die Verbindungen können durch Verschweißungen herbeigeführt werden. Insbesondere können alle Bypass-Förderrohrabschnitte der Fördervorrichtung an ein und demselben Träger angebracht sein.

Ein Trägerquerschnitt nach Anspruch 5 führt vorteilhaft zu einer Kanalbildung zwischen dem Träger und dem Bypass-Förderrohrabschnitt, was den Strömungswiderstand innerhalb der Fördervorrichtung vorteilhaft verringert. Der Träger kann einen gewinkelten, insbesondere einen L-Querschnitt aufweisen. Der Träger kann einen Bogenquerschnitt, beispielsweise in Form eines Teilkreisabschnitts, z. B. in Form eines halben, eines dreiviertel oder eines 5/6-Kreises haben. Der Träger kann einen offenen Rechteck-Querschnitt haben. Alternativ kann der Träger z. B. aus rechteckigem Vollmaterial ausgeführt sein.

Überlappende Bypass-Förderrohrabschnitte nach Anspruch 6 lassen sich kompakt im Haupt-Förderrohr unterbringen. Eine solche Anordnung der Bypass-Förderrohrabschnitte eignet sich besonders für gut fluidisierende und leichte Schüttgüter. In diesem Fall kann auf einen kanalbildenden Träger für die Bypass-Förderrohrabschnitte verzichtet werden. Ein Überlappungsgrad, also ein Verhältnis zwischen einer Überlappungslänge und einer Länge der Bypass-Förderrohrabschnitte, kann im Bereich zwischen 5% und 40% liegen.

Bypass-Förderrohrabschnitte mit rechteckigem Querschnitt können Vorteile in der Fertigung haben. Derartige Bypass-Förderrohrabschnitte können so angeordnet sein, dass zwei Seitenhalbierende des Rechteck-Querschnitts auf einer Mittelebene des Haupt-Förderrohrs liegen. Alternativ ist eine Anordnung möglich, bei der Ecken des rechteckigen Querschnitts der Bypass-Förderrohrabschnitte auf dieser Mittelebene liegen, also eine rautenartige Anordnung der Bypass-Förderrohrabschnitte im Haupt-Förderrohr.

Die Bypass-Förderrohrabschnitte können zu einer vertikalen Mittelebene des Haupt-Förderrohrs spiegelsymmetrisch ausgebildet sein; dies ist allerdings nicht zwingend. Bei einer Ausgestaltung der Bypass-Förderrohrabschnitte nach Anspruch 8 wird gezielt von dieser Spiegelsymmetrie abgewichen, wodurch eine vorteilhafte Drallführung des aus den Austrittsöffnungen der Bypass-Förderrohrabschnitte austretenden Fördergases erzielt werden kann. Hierdurch kann das Auffluidisieren des Schüttguts insbesondere im Bereich eines Rohrbodens des Haupt-Förderrohrs nochmals verbessert werden. Es können Bypass-Förderrohrabschnitte mit verschiedenen Schwenkwinkeln und insbesondere auch Bypass-Förderrohrabschnitte mit unterschiedlichen Orientierungen der Schwenkwinkel um eine Bypass-Rohrachse im und entgegen dem Uhrzeigersinn eingesetzt werden.

Die Vorteile einer Förderanlage nach Anspruch 9 entsprechen denjenigen, die vorstehend unter Bezugnahme auf die Fördervorrichtung nach den Ansprüchen 1 bis 8 bereits diskutiert wurden. Zur Förderanlage kann eine Fördergasquelle sowie eine Schüttgut-Aufgabevorrichtung, beispielsweise in Form einer Zellenradschleuse, gehören, die einem Schüttgut-Vorratsbehälter nachgeordnet ist.

Ausführungsbeispiele der Erfindung werden nachfolgend anhand der Zeichnung näher erläutert. In dieser zeigen:
- Fig. 1: einen Längsschnitt durch einen gebrochenen Ausschnitt einer Fördervorrichtung mit einem axial bereichsweise dargestellten Haupt-Förderrohr und einem innerhalb von diesem angeordneten Bypass-Förderrohrabschnitt;
- Fig. 2: einen Längsschnitt durch die gesamte Fördervorrichtung mit mehreren Bypass-Förderrohrabschnitten, axial unterbrochen dargestellt;
- Fig. 3: einen Schnitt gemäß Linie III-III in Fig. 2;
- Fig. 4: in einer zu Fig. 3 ähnlichen, das Haupt-Förderrohr allerdings nur ausschnittsweise zeigenden Darstellung eine Variante eines Trägers für den Bypass-Förderrohrabschnitt an einer Innenwand des Haupt-Förderrohrs;
- Fig. 5 bis 7: in einer zu Fig. 4 ähnlichen Darstellung weitere Träger-Varianten;
- Fig. 8: eine Seitenansicht des Bypass-Förderrohrabschnitts;
- Fig. 9: eine stirnseitige Ansicht auf eine Eintrittsöffnung des Bypass-Förderrohrabschnitts gemäß Blickrichtung IX in Fig. 8;
- Fig. 10: eine Aufsicht auf zwei abschnittsweise dargestellte benachbarte Bypass-Förderrohrabschnitte in der Umgebung eines Zwischenraums zwischen diesen beiden Bypass-Förderabschnitten;
- Fig. 11: in einer zu Fig. 2 ähnlichen Darstellung eine weitere Ausführung einer Fördervorrichtung;
- Fig. 12: in einer zu Fig. 1 ähnlichen, zusätzlich auch radial das Haupt-Förderrohr nur bereichsweise zeigenden Darstellung eine weitere Ausführung eines Bypass-Förderrohrabschnitts;
- Fig. 13: eine Aufsicht auf den Bypass-Förderrohrabschnitt nach Fig. 12;
- Fig. 14: in einer zu den Fig. 4 bis 7 ähnlichen Darstellung die Fördervorrichtung mit dem Bypass-Förderrohrabschnitt nach den Fig. 12 und 13;
- Fig. 15: in einer zu Fig. 14 ähnlichen Darstellung eine Förderrohrvorrichtung mit einer weiteren Variante eines Querschnitts für einen Bypass-Förderrohrabschnitt;
- Fig. 16 und 17: in einer zu Fig. 2 ähnlichen Darstellung weitere Ausführungen einer Fördervorrichtung;
- Fig. 18: in einer zu Fig. 3 ähnlichen Darstellung eine weitere Ausführung einer Fördervorrichtung mit abgewinkeltem Austritts-Rohrbereich;
- Fig. 19: in einer zu Fig. 1 ähnlichen Darstellung eine weitere Ausführung eines Bypass-Förderrohrabschnitts;
- Fig. 20: einen Schnitt gemäß Linie XX-XX in Fig. 19 und
- Fig. 21 und 22: zwei weitere Varianten von gebogenen Bypass-Förderrohrabschnitten, die anstelle des gebogenen Bypass-Förderrohrabschnitts der Variante nach Fig. 19 zum Einsatz kommen können.

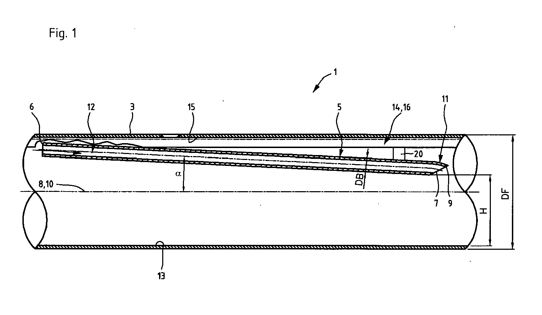

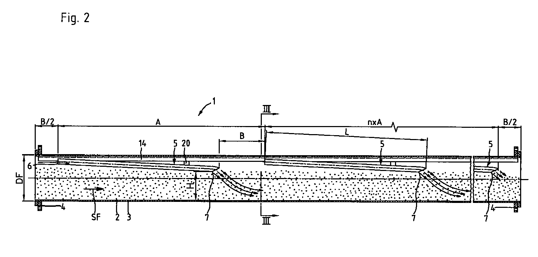

Anhand der Figuren 1 bis 3 sowie 8 bis 10 wird nachfolgend eine Ausführung einer Fördervorrichtung 1 zum pneumatischen Fördern von Schüttgut 2 beschrieben, welches z. B. in der Fig. 2 schematisch angedeutet ist.

Die Fördervorrichtung 1 hat ein Haupt-Förderrohr 3. Das Haupt-Förderrohr 3 hat einen Außendurchmesser DF. In der Fig. 2 ist, axial unterbrochen, ein Gesamtabschnitt des Haupt-Förderrohrs 3 dargestellt. Dieser Gesamtabschnitt hat an seinen beiden Enden Anschlussflansche 4, über die gleich aufgebaute Gesamtabschnitte des Haupt-Förderrohrs 3 miteinander verbunden werden können oder über die der Gesamtabschnitt mit anderen Förderkomponenten einer Förderanlage verbunden werden kann, deren Bestandteil die Fördervorrichtung 1 ist. Die in der Fig. 2 dargestellte Fördervorrichtung 1 kann eine Länge von beispielsweise 6 m haben.

Das Haupt-Förderrohr 3 hat einen runden Querschnitt. Prinzipiell sind auch andere Querschnittsformen des Haupt-Förderrohrs 3 möglich.

Eingangsseitig, also in den Figuren 1 und 2 von links her, steht das Haupt-Förderrohr 3 mit einer nicht dargestellten Fördergasquelle der Förderanlage in Fluidverbindung. Die Förderanlage hat eine Zuführeinrichtung für das Schüttgut mit einem Vorratsbehälter, beispielsweise einem von oben beschickbaren Mischerbehälter, und einer Dosiereinrichtung, beispielsweise einer Zellenradschleuse. Weiterhin hat die Förderanlage eine Zuführeinrichtung für das Fördergas mit der Druck-Fördergasquelle und einem insbesondere regelbaren Dosierventil. An einem Aufgabeort mündet eine der Dosiereinrichtung nachgeordnete Schüttgutleitung in das dem Dosierventil nachgeordnete Haupt-Förderrohr 3 ein.

Innerhalb des Haupt-Förderrohrs 3 verlaufend sind Bypass-Förderrohrabschnitte 5 angeordnet. Die Bypass-Förderrohrabschnitte 5 sind innerhalb des Haupt-Förderrohrs 3 in Abständen A nacheinander angeordnet. Der Abstand A ist der Abstand der Bypass-Förderrohrabschnitte 5 von der Eintrittsöffnung 6 eines der Bypass-Förderrohrabschnitte 5 bis zur Eintrittsöffnung 6 des benachbarten Bypass-Förderrohrabschnitts 5. Benachbarte der Bypass-Förderrohrabschnitte 5 sind durch einen freien Abstand B voneinander getrennt. Die Bypass-Förderrohrabschnitte 5 stellen voneinander separate Rohrkomponenten dar. Eine Haupt-Erstreckungsrichtung der Bypass-Förderrohrabschnitte 5 verläuft längs des Haupt-Förderrohrs 3.

Bei verbauter Fördervorrichtung 1 sind in Rohrbereichen des Haupt-Förderrohrs 3 mit horizontaler Verlaufskomponente die Bypass-Förderrohrabschnitte 5 der Ausführung nach den Figuren 1 bis 3 sowie 8 bis 10 in einem oberen Querschnittsabschnitt des Haupt-Förderrohrs 3 angeordnet, wie insbesondere in den Figuren 1 und 2 dargestellt. Der Querschnitt der Bypass-Förderrohrabschnitte 5 beträgt lediglich einen Bruchteil des Querschnitts des Haupt-Förderrohrs 3. In der Regel beträgt der Querschnitt der Bypass-Förderrohrabschnitte 5 weniger als ein Viertel des Querschnitts des Haupt-Förderrohrs 3. Die Bypass-Förderrohrabschnitte 5 haben einen Außendurchmesser DB.

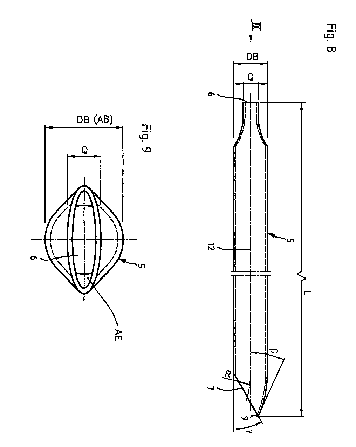

Jeder der Bypass-Förderrohrabschnitte 5 hat eingangsseitig eine Eingangsöffnung 6 zum Eintritt des Fördergases in den Bypass-Förderrohrabschnitt 5. Die Bypass-Förderrohrabschnitte 5 können im Bereich der Haupt-Eintrittsöffnung 6 gequetscht ausgeführt sein, wie die Stirnansicht der Fig. 9 verdeutlicht. Ein stadionförmiger Querschnitt AE der Eintrittsöffnung 6 beträgt etwa 30% bis 80% des direkt nachfolgenden runden Querschnitts DB (AB) der Bypass-Förderrohrabschnitte 5. In Richtung einer Quetschkraft, die bei verbauter Fördervorrichtung 1 mit horizontaler Verlaufskomponente des Haupt-Förderrohrs 3 einer vertikalen Richtung entspricht, hat die gequetschte Eintrittsöffnung 6 eine Erstreckung Q (vgl. Fig. 9).

Am der Eintrittsöffnung 6 gegenüberliegenden Ende hat der Bypass-Förderrohrabschnitt 5 eine Austrittsöffnung 7 zum Austritt des Fördergases aus dem Bypass-Förderrohrabschnitt 5. Die Eintrittsöffnung 6 ist von einer zentralen Längsachse 8 des Haupt-Förderrohrs 3 weiter beabstandet als die Austrittsöffnung 7. Die Austrittsöffnung 7 liegt bei der Ausführung nach den Figuren 1 und 2 oberhalb der Längsachse 8. Eine die Austrittsöffnung 7 definierende umlaufende Begrenzung 9 der Austrittsöffnung 7, die gleichzeitig einen Wandabschnitt des Bypass-Förderrohrabschnitts 5 darstellt, schließt mit dem Bypass-Förderrohrabschnitt 5 im Bereich von dessen geradem Verlauf einen Winkel γ ein (vgl. Fig. 8).

Generell gilt, dass die Eintrittsöffnung 6 bei verbautem Haupt-Förderrohr 3 in Haupt-Förderrohrbereichen mit horizontaler Verlaufskomponente des Haupt-Förderrohrs 3 in einem Querschnittsabschnitt des Haupt-Förderrohrs 3 angeordnet ist, der oberhalb eines Querschnittsabschnitts des Haupt-Förderrohrs 3 liegt, in dem die Austrittsöffnung 7 angeordnet ist.

Zwischen der Eintrittsöffnung 6 und der Austrittsöffnung 7 hat jeder Bypass-Förderrohrabschnitt 5 eine Länge L.

Die Bypass-Förderrohrabschnitte 5 haben jeweils einen Rohrverlauf, der benachbart zur Eintrittsöffnung 6 gerade ist und unter einem Winkel α zur zentralen Längsachse 8 verläuft. Benachbart zur Austrittsöffnung 7 haben die Bypass-Förderrohrabschnitte 5 einen Rohrverlauf, der auf die zentrale Längsachse zu gebogen ist, wie z. B. in der Fig. 1 durch einen Bogenabschnitt 11 einer den Verlauf des Bypass-Förderrohrabschnitts 5 andeutenden Mittellinie 12 verdeutlicht ist. Der Bogenabschnitt 11 ist mit einem Krümmungsradius R gebogen (vgl. Fig. 8).

Aufgrund der Biegung des Bypass-Förderrohrabschnitts 5 schließt eine Tangente an einem äußeren Abschnitt der Begrenzung 9 der Austrittsöffnung 7 mit der Mittellinie 12 des gerade verlaufenden Bereichs des Bypass-Förderrohrabschnitts 5 einen Winkel β ein (vgl. Fig. 8). Soweit der Bypass-Förderrohrabschnitt eingangsseitig keinen gerade verlaufenden Bereich aufweist, was bei einigen der nachfolgend beschriebenen Varianten der Fall ist, ist der Winkel β definiert zwischen der vorstehend erwähnten Tangente und einem Verlauf der Mittellinie des Bypass-Förderrohrabschnitts im Bereich der Eintrittsöffnung 6. Der Winkel β stellt ein Maß für die Biegung des Bypass-Förderrohrabschnitts zwischen der Eintrittsöffnung 6 und der Austrittsöffnung 7 dar.

Die Austrittsöffnung 7 endet in einer Höhe H über einem Boden 13 des Haupt-Förderrohrs 3 gelegen. Der Boden 13 stellt dabei denjenigen Umfangsabschnitt des Haupt-Förderrohrs 3 dar, der bei verbauter Fördervorrichtung 1 am weitesten unten liegend angeordnet ist. Vom Boden 13 sind die Eintrittsöffnungen 6 der Bypass-Förderrohrabschnitte 5 weiter beabstandet als die Austrittsöffnungen 7.

Die Bypass-Förderrohrabschnitte 5 sind über einen gemeinsamen Träger 14 mit dem Haupt-Förderrohr 3 verbunden. Der Träger 14 ist einerseits an einer dem Rohrboden 13 gegenüberliegenden Innenwand 15 des Haupt-Förderrohrs 3 und andererseits an den Bypass-Förderrohrabschnitten 5 festgelegt und insbesondere verschweißt. Bei der Fördervorrichtung 1 nach den Figuren 1 und 2 sind alle Bypass-Förderrohrabschnitte 5 über ein und denselben Träger 14 an der Innenwand 15 des Haupt-Förderrohrs 3 festgelegt.

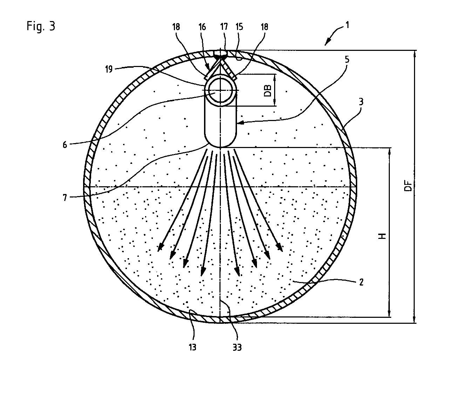

Der Träger 14 umfasst eine Winkelstrebe 16 mit gleichschenklig L-förmigem Querschnitt. Im Schnitt nach Fig. 3, bei dem der Rohrboden 13 unten angeordnet ist, hat der Querschnitt der Winkelstrebe 16 die Form eines Satteldachs. Ein First der Winkelstrebe 16 ist mit der Innenwand 15 des Haupt-Förderrohrs 3 verschweißt. Hierzu sind in dem Haupt-Förderrohr 3 Schweißöffnungen 17 ausgeführt. Freie Querschnittsenden 18 der Winkelstrebe 16 sind mit einer Außenwand 19 des Bypass-Förderrohrabschnitts 5 benachbart zur Eintrittsöffnung 6 verschweißt.

Durch die Gestaltung des Trägers 14 mit offenem Querschnitt ist im Bereich des Trägers 14 ein weiterer Strömungskanal für das Fördergas gebildet, so dass ein Strömungswiderstand durch den Träger 14 minimiert ist.

Zum Träger 14 gehört weiterhin ein Abstandshalter 20. Dieser ist axial jeweils benachbart zur Austrittsöffnung 7 auf Höhe eines der Bypass-Förderrohrabschnitte 5 angeordnet. Der Abstandshalter 20 ist an einem Ende mit dem Bypass-Förderrohrabschnitt 5 und am anderen Ende mit der Winkelstrebe 16 verschweißt. Über die Länge des Abstandshalters 20 und über dessen axiale Position kann die Größe des Winkels α vorgegeben werden. Jedem Bypass-Förderrohrabschnitt 5 ist einer der Abstandshalter 20 zugeordnet.

Zwischen der Eintrittsöffnung 6 des in Strömungsrichtung SF (vgl. Fig. 2) des Fördergases führenden Bypass-Förderrohrabschnitts 5 und einem Eintritt des Haupt-Förderrohrs 3 liegt ein Abstand B/2, also die Hälfte des freien Abstandes B zwischen benachbarten der Bypass-Förderrohrabschnitte 5. Ein entsprechender Abstand B/2 liegt zwischen der Austrittsöffnung 7 des in der Förderrichtung SF letzten Bypass-Förderrohrabschnitts 5 der Fördervorrichtung 1 (vgl. Fig. 2) und einem Austritt des Haupt-Förderrohrs 3.

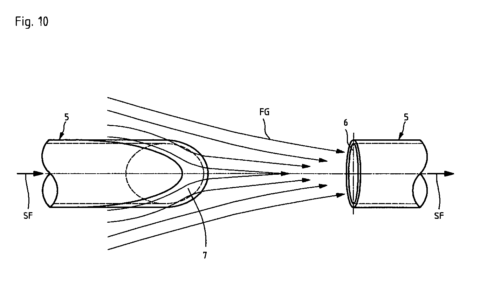

Fig. 10 verdeutlicht die Strömungsverhältnisse für das Fördergas im Bereich zwischen zwei benachbarten der Bypass-Förderrohrabschnitte 5. Strömungslinien des Fördergases, die auch in anderen Figuren der Zeichnung den Fördergasverlauf verdeutlichen, sind in der Fig. 10 mit FG bezeichnet. Aufgrund der gebogenen Ausführung der Bypass-Förderrohrabschnitte 5 im Bereich der Austrittsöffnung 7 kann das außerhalb am in der Fig. 10 links dargestellten Bypass-Förderrohrabschnitt 5 vorbeistreichende Fördergas ausreichend im Förderverlauf vor der Eintrittsöffnung 6 des in der Fig. 10 rechts dargestellten Bypass-Förderrohrabschnitts 5 in diese Eintrittsöffnung 6 hinein umgelenkt werden. Ein Windschatten des austrittsseitigen Bypass-Förderrohrabschnitts 5 endet also ausreichend vor der Eintrittsöffnung 6 des nächsten Bypass-Förderrohrabschnitts 5. Dies begünstigt die Fördergasströmung in den Bypass-Förderrohrabschnitten 5.

Durch die gebogene Ausführung der Bypass-Förderrohrabschnitte 5 im Bereich der Austrittsöffnungen 7 ist verhindert, dass das durch einen der Bypass-Förderrohrabschnitte 5 strömende Fördergas nach Austritt aus dessen Austrittsöffnung 7 direkt wieder in die nächste Eintrittsöffnung 6 des in der Förderrichtung SF nächstfolgenden Bypass-Förderrohrabschnitts 5 eindringt. Dies gewährleistet eine intensive Wechselwirkung des Fördergases mit dem benachbart zum Rohrboden 13 geförderten Schüttgut 2.

Die Fördervorrichtung 1 arbeitet folgendermaßen: In die Fördervorrichtung 1 werden sowohl das Schüttgut 2 als auch das Fördergas eingangsseitig aufgegeben. Das aktive und andauernde Einströmen bzw. Einwirbeln des Fördergases über die Austrittsöffnungen 7 führt zu einem ständigen Fluidisieren des Schüttgutes 2. Ein Ablagern des Schüttgutes 2 im Bereich des Rohrbodens 13 und eine unerwünschten Schüttgut-Stopfen- bzw. Pfropfenbildung sind hierdurch verhindert. Durch das Fluidisieren werden zudem ansonsten durch Pfropfen verursachte, unerwünscht hohe Kräfte im Bereich von Umlenkbögen der Förderanlage verhindert. Die Fördervorrichtung 1 sowie andere Förderkomponenten der Förderanlage können dann mit entsprechend gering dimensionierten Halterungen an einem in der Zeichnung nicht dargestellten Tragrahmen befestigt sein. Aufgrund der Fördergasführung über die Bypass-Förderrohrabschnitte 5 kann eine Einsparung des Fördergases im Vergleich zum Stand der Technik von bis zu 50% erreicht werden. Umgekehrt kann beim gleichen Einsatz einer gegebenen Fördergasmenge eine Leistungserhöhung der Förderanlage mit der Fördervorrichtung 1 bei gleichzeitiger Vermeidung von hohen Druckspitzen erreicht werden, die ansonsten aufgrund unerwünschter Stopfenbildung resultieren würden. Die Fördervorrichtung 1 schafft die Möglichkeit, ein höheres Fördergas-Druckniveau auszunutzen, ohne dass hierdurch andere Fördergasquellen eingesetzt werden müssen. Auch ein Druckverlust des Fördergases längs der Fördervorrichtung 1 ist gering. Das über die Bypass-Förderrohrabschnitte 5 geführte Fördergas ermöglicht bei Unterbrechung einer Schüttgutzuführung auch ein effizientes Freiblasen der Fördervorrichtung 1. Im Haupt-Förderrohr 3 und auch in den Bypass-Förderrohrabschnitten 5 vorhandene Ablagerungen des Schüttguts 2 können dann ausgeblasen werden.

Als Schüttgut 2 kann ein pulverförmiges Schüttgut zum Einsatz kommen, welches in der Mineralstoff- bzw. in der Kunststoffindustrie vorgesehen ist. Als Schüttgut 2 kann insbesondere Alumina, Flugasche, Kreide und PTA (Terephthalsäure) zum Einsatz kommen.

Nachfolgend werden noch Dimensionsverhältnisse der Fördervorrichtung 1 diskutiert:

Ein Verhältnis DF/DB zwischen einem Durchmesser DF des Hauptförderrohrs 3 und einem Durchmesser DB der Bypass-Förderrohrabschnitte 5 kann im Bereich zwischen 1,5 und 15 und kann im Bereich zwischen 4 und 12 liegen.

Ein Verhältnis L/DF zwischen der Länge der Bypass-Förderrohrabschnitte 5 und dem Durchmesser des Haupt-Förderrohrs 3 kann im Bereich zwischen 0,5 und 7 und kann im Bereich zwischen 2 und 5 liegen.

Ein Verhältnis A/DB zwischen dem Abstand der Bypass-Förderrohrabschnitte 5 von Eintrittsöffnung 6 zu Eintrittsöffnung 6 und dem Außendurchmesser der Bypass-Förderrohrabschnitte 5 kann im Bereich zwischen 5 und 70 und kann im Bereich zwischen 10 und 50 liegen.

Ein Verhältnis B/DB des freien Abstandes zwischen den Bypass-Förderrohrabschnitten 5 und dem Außendurchmesser der Bypass-Förderrohrabschnitte 5 kann im Bereich zwischen 1 und 20 und kann im Bereich zwischen 2 und 15 liegen.

Ein Verhältnis AE/DB kann im Bereich zwischen 0,1 und 1 und kann im Bereich zwischen 0,3 und 0,9 liegen.

Der Winkel α kann im Bereich zwischen 0° und 60° und kann im Bereich zwischen 1 ° und 12° liegen.

Der Winkel β kann im Bereich zwischen 0° und 90° und kann im Bereich zwischen 5° und 40° liegen.

Der Winkel γ kann im Bereich zwischen 0° und 90° und kann im Bereich zwischen 3° und 60° liegen.

Ein Verhältnis H/DF der Höhe der Austrittsöffnung 7 über dem Rohrboden 13 zum Außendurchmesser des Haupt-Förderrohrs 3 kann im Bereich zwischen 0 und 0,9 und kann im Bereich zwischen 0,3 und 0,8 liegen.

Ein Verhältnis R/DB zwischen dem Krümmungsradius des Bogenabschnitts 11 und dem Außendurchmesser des Bypass-Förderrohrabschnitts 5 kann im Bereich zwischen 0,5 und 10 und kann im Bereich zwischen 1 und 4 liegen.

Bei gut fluidisierbaren und nicht zur Pfropfenbildung neigenden Schüttgütern kann die Länge L des Bypass-Förderrohrabschnitts 5 auch kürzer ausgeführt werden, als es dem vorstehend angesprochenen Verhältnis L/DF entspricht. Die Länge L kann in diesem Fall so kurz ausgeführt werden, dass die Eintrittsöffnung 6 sehr nahe an der Austrittsöffnung 7 liegt. Die Länge L kann insbesondere so kurz sein, dass der Bypass-Förderrohrabschnitt 5 nur unwesentlich länger ist als eine Erstreckung der Austrittsöffnung 7 längs des Haupt-Förderrohrs 3. In diesem Fall ist das Verhältnis L/DF deutlich kleiner als 1.

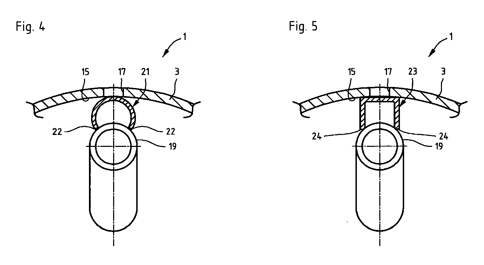

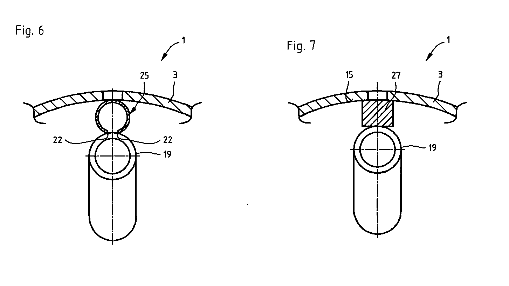

Anhand der Figuren 4 und 7 werden weitere Ausgestaltungen eines Trägers beschrieben, der anstelle des Trägers 14 der Ausführung nach den Figuren 1 bis 3 zum Einsatz kommen kann. Komponenten, die denjenigen entsprechen, die vorstehend unter Bezugnahme auf die Figuren 1 bis 3 sowie 8 bis 10 bereits erläutert wurden, tragen die gleichen Bezugsziffern und werden nicht nochmals im Einzelnen diskutiert.

Bei der Ausführung nach Fig. 4 ist ein Träger 21 mit einem Bogenquerschnitt in Form eines Halbkreises gestaltet. Der Bogenquerschnitt des Trägers 21 öffnet sich zum Bypass-Förderrohrabschnitt 5 hin. Im Bereich der Eintrittsöffnung 6 ist der Träger 21 mit freien Endkanten 22 des Bogenquerschnitts mit der Außenwand 19 des Bypass-Förderrohrabschnitts 5 verschweißt. Der Träger 21 ist im Bereich des Scheitels des Bogenquerschnitts mit der Innenwand 15 des Haupt-Förderrohrs 3 verschweißt.

Ein Träger 23 nach Fig. 5 hat einen offenen Rechteck-Querschnitt, also einen U-förmigen Querschnitt, der nach unten hin geöffnet ist. Im Bereich freier Endkanten 24 ist der Träger 23 mit der Außenwand 19 des Bypass-Förderrohrabschnitts 5 verschweißt. Ein Basisschenkel des U-förmigen Querschnitts des Trägers 23 ist mit der Innenwand 15 des Haupt-Förderrohrs 3 verschweißt.

Ein Träger 25 nach Fig. 6 entspricht dem Träger 21 nach Fig. 4 mit dem Unterschied, dass ein Bogenquerschnitt des Trägers 25 etwa 5/6 eines Vollkreises abdeckt.

Ein Träger 27 nach Fig. 7 ist als Stab aus rechteckigem Vollmaterial ausgeführt. Eine in der Fig. 7 untere Seitenwand des Trägers 27 ist mit der Au-βenwand 19 des Bypass-Förderrohrabschnitts 5 verschweißt und eine in der Fig. 7 obere Seitenwand des Trägers 27 ist mit der Innenwand 15 des Haupt-Förderrohrs 3 verschweißt.

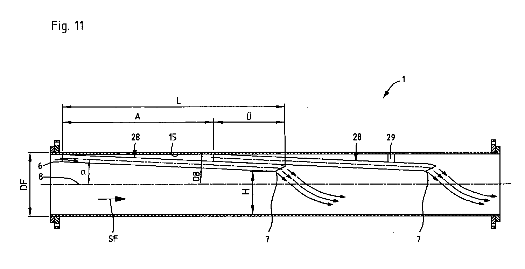

Anhand der Fig. 11 wird nachfolgend eine weitere Ausführung von Bypass-Förderrohrabschnitten für die Fördervorrichtung 1 beschrieben. Komponenten, die denjenigen entsprechen, die vorstehend unter Bezugnahme auf die Fig. 1 bis 10 bereits erläutert wurden, tragen die gleichen Bezugsziffern und werden nicht nochmals im Einzelnen diskutiert.

Bei der Anordnung von Bypass-Förderrohrabschnitten 28 nach Fig. 11 1 liegt zwischen benachbarten der Bypass-Förderrohrabschnitte 28 kein freier Abstand B vor, sondern benachbarte der Bypass-Förderrohrabschnitte 28 sind einander axial mit einem Überstand bzw. einer Überlappungslänge Ü überlappend im Haupt-Förderrohr 3 angeordnet. In ihrer grundsätzlichen Ausformung mit benachbart zur Eintrittsöffnung 6 geradem und benachbart zur Austrittsöffnung 7 auf die zentrale Längsachse 8 zu gebogenem Rohrverlauf entsprechen die Bypass-Förderabschnitte 28 den Bypass-Förderabschnitten 5 der Ausführungen nach den Figuren 1 bis 10. Der Winkel α ist bei der Anordnung nach Fig. 11 etwas kleiner als bei der Anordnung nach Fig. 1. Diejenigen Bypass-Förderrohrabschnitte 5, die im Bereich der Austrittsöffnung 7 mit einem benachbarten Bypass-Förderrohrabschnitt 28 überlappen, sind im Bereich der Austrittsöffnung 7 über diesen Bypass-Förderrohrabschnitt 5 mit der Innenwand 15 des Haupt-Förderrohrs 3 verbunden. Hierzu ist dieser benachbarte Bypass-Förderrohrabschnitt 28 einerseits mit dem Bypass-Förderrohrabschnitt 28 im Bereich der Austrittsöffnung 7 und andererseits mit der Innenwand 15 verschweißt. Lediglich für den in der Schüttgut-Förderrichtung SF letzten Bypass-Förderrohrabschnitt 5 ist ein Abstandshalter 29 nach Art der Abstandshalter 20 der Ausführung nach Fig. 1 zur Befestigung des Bypass-Förderrohrabschnitts 5 im Bereich der Austrittsöffnung 7 erforderlich.

Ein Verhältnis Ü/DB des Überstandes zwischen den benachbarten Bypass-Förderrohrabschnitten 28 und dem Außendurchmesser der Bypass-Förderrohrabschnitte 28 kann im Bereich zwischen 1 und 30, kann im Bereich zwischen 1,5 und 20 und insbesondere im Bereich zwischen 2 und 10 liegen.

Ein Überlappungsgrad Ü/L, also ein Verhältnis zwischen der Überlappungslänge Ü und der Länge L des Bypass-Förderrohrabschnitts 28, kann m Bereich zwischen 1/20 und 1/3 liegen.

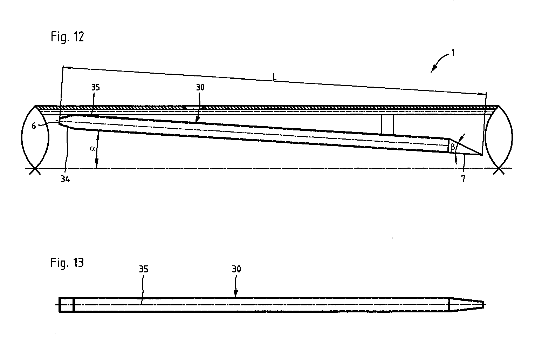

Anhand der Figuren 12 bis 14 wird nachfolgend eine weitere Ausführung von Bypass-Förderrohrabschnitten für die Fördervorrichtung 1 beschrieben. Komponenten, die denjenigen entsprechen, die vorstehend unter Bezugnahme auf die Fig. 1 bis 10 bereits erläutert wurden, tragen die gleichen Bezugsziffern und werden nicht nochmals im Einzelnen diskutiert.

Ein Bypass-Förderrohrabschnitt 30 hat bei der Ausführung der Fördervorrichtung 1 nach den Figuren 12 bis 14 einen rechteckigen Querschnitt.

Die Anordnung des rechteckigen Bypass-Förderrohrabschnitts 30 im Haupt-Förderrohr 3 ist derart, dass zwei Seitenhalbierende 31, 32 des rechteckigen Querschnitts auf einer vertikalen Mittelebene 33 des Haupt-Förderrohrs 3 liegen, die gleichzeitig eine längs des Haupt-Förderrohrs 3 verlaufende Spiegel-Symmetrieachse der Fördervorrichtung 1 nach den Figuren 12 bis 14 darstellt.

Eine Bodenwand 34 und eine Deckwand 35 des Bypass-Förderrohrabschnitts 30 sind im Bereich der Eintrittsöffnung 6 aufeinander zu gebogen, so dass die Eintrittsöffnung 6 vergleichbar zu den gequetschten Eintrittsöffnungen 6 der Ausführungen nach den Figuren 1 bis 11 in ihrem Querschnitt AE gegenüber dem sonstigen Rechteck-Querschnitt des Bypass-Förderrohrabschnitts 30 verringert ist.

Im Bereich der Austrittsöffnung 7 ist der Bypass-Förderrohrabschnitt 30 mit konisch sich verjüngend zulaufend angeordneten Wandelementen gestaltet. Die Austrittsöffnung 7 hat insgesamt einen trapezförmigen Querschnitt.

Der Bypass-Förderrohrabschnitt 30 ist über einen Träger mit einer Winkelstrebe nach Art der Winkelstrebe 16 der Ausführung nach den Figuren 1 bis 3 an der Innenwand 15 des Haupt-Förderrohrs 3 festgelegt.

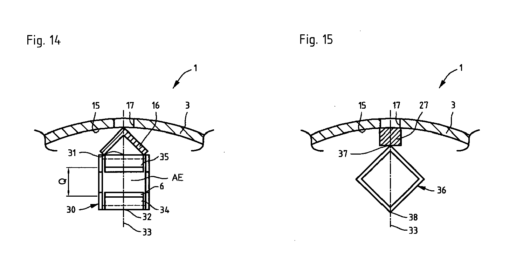

Anhand der Fig. 15 wird nachfolgend eine weitere Ausführung von Bypass-Förderrohrabschnitten für die Fördervorrichtung 1 beschrieben. Komponenten, die denjenigen entsprechen, die vorstehend unter Bezugnahme auf die Fig. 1 bis 10 bereits erläutert wurden, tragen die gleichen Bezugsziffern und werden nicht nochmals im Einzelnen diskutiert.

Ein Bypass-Förderrohrabschnitt 36 der Fördervorrichtung 1 nach Fig. 15 hat ebenfalls einen rechteckigen Querschnitt. Die Anordnung des Bypass-Förderrohrabschnitts 36 im Haupt-Förderrohr 3 ist derart, dass zwei Ecken 37, 38 des Bypass-Förderrohrabschnitts 36 auf der Mittelebene 33 des Haupt-Förderrohrs 3 liegen. Der rechteckige, quadratische Querschnitt des Bypass-Förderrohrabschnitts 36 liegt also nach Art einer Raute im Haupt-Förderrohr 3. Über die Ecke 37 ist der Bypass-Förderrohrabschnitt 36 mit einem Träger nach Art des Trägers 27 der Ausführung nach Fig. 7 an der Innenwand 15 des Haupt-Förderrohrs 3 festgelegt.

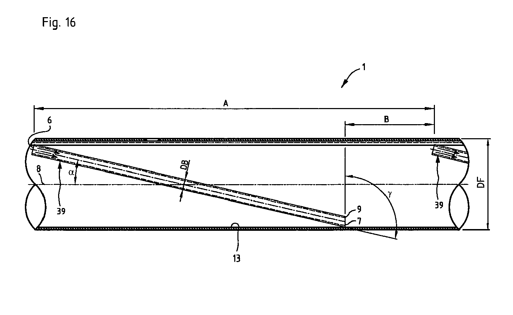

Anhand der Fig. 16 wird nachfolgend eine weitere Ausführung von Bypass-Förderrohrabschnitten für die Fördervorrichtung 1 beschrieben. Komponenten, die denjenigen entsprechen, die vorstehend unter Bezugnahme auf die Fig. 1 bis 10 bereits erläutert wurden, tragen die gleichen Bezugsziffern und werden nicht nochmals im Einzelnen diskutiert.

Ein Bypass-Förderrohrabschnitt 39 der Fördervorrichtung 1 nach Fig. 15 verläuft zwischen der Eintrittsöffnung 6 und der Austrittsöffnung 7 insgesamt gerade, weist also im Bereich der Austrittsöffnung 7 weder einen Bogen noch einen Knick auf.

Der Winkel γ zwischen der von der Begrenzung 9 vorgegebenen Ebene und dem Verlauf des Bypass-Förderrohrabschnitts 5 ist bei der Ausführung nach Fig. 16 größer als 90°. Es gilt näherungsweise: γ = 90° + α, so dass die von der Begrenzung 9 der Austrittsöffnung 7 vorgegebene Ebene mit der Längsachse 8 einen rechten Winkel einschließt.

Die Austrittsöffnung 7 endet beim Bypass-Förderrohrabschnitt 5 direkt über dem Rohrboden 13. Im Bereich der Austrittsöffnung 7 kann der Bypass-Förderrohrabschnitt 5 am Rohrboden 13 festgelegt und mit diesem insbesondere verschweißt sein.

Bei der Ausführung nach Fig. 16 gilt also: H = 0.

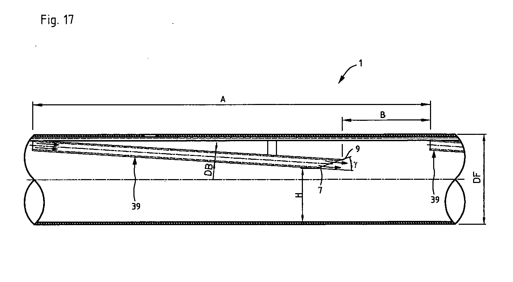

Anhand der Fig. 17 wird nachfolgend eine weitere Ausführung von Bypass-Förderrohrabschnitten für die Fördervorrichtung 1 beschrieben. Komponenten, die denjenigen entsprechen, die vorstehend unter Bezugnahme auf die Fig. 1 bis 10 bereits erläutert wurden, tragen die gleichen Bezugsziffern und werden nicht nochmals im Einzelnen diskutiert.

Ein Bypass-Förderrohrabschnitt 40 verläuft bei der Ausführung der Fördervorrichtung 1 nach Fig. 17 ebenfalls gerade, also weder gebogen noch geknickt. Der Winkel γ zwischen der von der Begrenzung 9 der Austrittsöffnung 7 vorgegebenen Ebene und dem Verlauf des Bypass-Förderrohrabschnitts 40 ist bei der Ausführung nach Fig. 17 etwa 30°. Die Höhe H bei der Ausführung nach Fig. 17 ist etwas größer als die Hälfte des Außendurchmesser DF des Haupt-Förderrohrs 3.

Bei der Ausführung nach Fig. 16 kann der Winkel γ zwischen der von der Begrenzung 9 vorgegebenen Ebene und dem Verlauf des Bypass-Förderrohrabschnitts 39 im Bereich zwischen 45° und 150°, kann im Bereich zwischen 80° und 130° und kann insbesondere im Bereich zwischen 90° und 120° liegen.

Bei der Ausführung nach Fig. 17 kann der Winkel γ zwischen der von der Begrenzung 9 vorgegebenen Ebene und dem Verlauf des Bypass-Förderrohrabschnitts 39 im Bereich zwischen 10° und 100°, kann im Bereich zwischen 15° und 70° und kann insbesondere im Bereich zwischen 20° und 50° liegen.

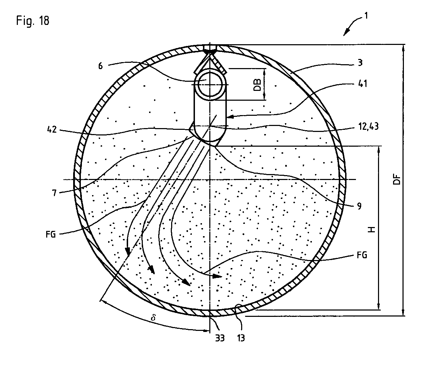

Anhand der Fig. 18 wird nachfolgend eine weitere Ausführung von Bypass-Förderrohrabschnitten für die Fördervorrichtung 1 beschrieben. Komponenten, die denjenigen entsprechen, die vorstehend unter Bezugnahme auf die Fig. 1 bis 10 bereits erläutert wurden, tragen die gleichen Bezugsziffern und werden nicht nochmals im Einzelnen diskutiert.

Im Unterschied zu allen bislang beschriebenen Ausführungen ist ein Bypass-Förderrohrabschnitt 41 bei der Ausführung nach Fig. 18 nicht zur vertikalen Mittelebene 33 des Haupt-Förderrohrs 3 spiegelsymmetrisch gestaltet. Ein Austritts-Rohrbereich 42 des Bypass-Förderrohrabschnitts 41 ist um eine Rohrachse 43 des Bypass-Förderrohrabschnitts 5, die längs der gerade verlaufenden Mittellinie 12 (vgl. die Ausführung nach Fig. 1) verläuft, um einen Winkel δ relativ zur vertikalen Mittelebene 33 verschwenkt.

Der Winkel δ kann im Bereich zwischen 0° und 130°, kann im Bereich zwischen 10° und 90° und insbesondere im Bereich zwischen 20° und 50° liegen.

Die Austrittsöffnung 7 des Bypass-Förderrohrabschnitts 5 ist von der Rohrachse 43 beabstandet.

Aufgrund des Schwenkwinkels δ und das hierdurch erforderliche seitliche Ausblasen des Fördergases ergibt sich im Zusammenspiel mit der Schwerkraft eine im Ansatz wendelförmige Fördergasführung, die in der Fig. 18 durch Richtungspfeile FG angedeutet ist. Durch diesen Drall bei der Fördergasführung wird eine Ablagerung des Schüttguts im Bereich des Rohrbodens 13 zusätzlich verringert oder verhindert.

In Förderrichtung kann der Schwenkwinkel δ im Uhrzeigersinn, wie in der Fig. 18 dargestellt, oder entgegen dem Uhrzeigersinn orientiert sein. Alle Bypass-Förderrohrabschnitte 42 der Fördervorrichtung 1 nach Fig. 18 können den gleichen und den gleich orientierten Schwenkwinkel δ aufweisen. Auch Ausführungen der Fördervorrichtung 1 mit verschwenktem Austritts-Rohrbereich mit unterschiedlichen Schwenkwinkeln δ und auch mit unterschiedlichen Schwenk-Orientierungen, insbesondere mit alternierender Verschwenkung im Uhrzeigersinn und entgegen dem Uhrzeigersinn können zum Einsatz kommen.

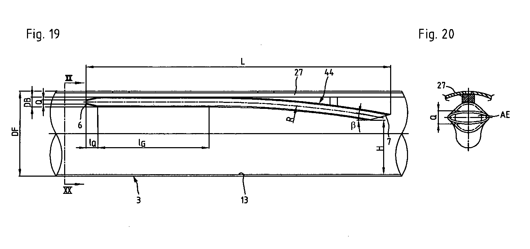

Anhand der Fig. 19 und 20 wird nachfolgend eine weitere Ausführung eines Bypass-Förderrohrabschnitts 44 für die Fördervorrichtung 1 beschrieben. Komponenten, die denjenigen entsprechen, die vorstehend unter Bezugnahme auf die Fig. 1 bis 18 bereits erläutert wurden, tragen die gleichen Bezugsziffern und werden nicht nochmals im Einzelnen diskutiert.

Der Bypass-Förderrohrabschnitt 44 nach Fig. 19 ist ähnlich wie die Ausführung nach den Fig. 8 und 9 im Bereich der Eintrittsöffnung 6 gequetscht ausgeführt. Eine Längenerstreckung dieses eingangsseitigen gequetschten Bereichs des Bypass-Förderrohrabschnitts 44 ist in der Fig. 19 mit l_{Q} bezeichnet. Hieran schließt sich ein gerade verlaufender Bereich des Bypass-Förderrohrabschnitts 44 mit einer Länge l_{G} an. Hieran schließt sich ein mit einem Radius R gebogener Bereich des Bypass-Förderrohrabschnitts 44 mit einer Länge L-(l_{G} + l_{Q}) an, wobei L die Gesamtlänge des Bypass-Förderrohrabschnitts 44 ist. Der Winkel β kann bei der Ausführung nach Fig. 19 im Bereich zwischen 10° und 80° und kann im Bereich zwischen 15° und 60° liegen. Das Verhältnis l_{G}/L kann bei der Ausführung nach Fig. 19 im Bereich von 1/10 bis 1/1,5 liegen. Das Verhältnis l_{G}/L kann im Bereich zwischen 0,15 und 0,4 liegen. Entsprechende Verhältnisse resultieren für die Länge des gebogenen Bereichs im Verhältnis zur Gesamtlänge des Bypass-Förderrohrabschnitts 44. Der Biegeradius R kann im Bereich von 0,2 bis 1,5 der Länge L des Bypass-Förderrohrabschnitts 44 liegen.

Bei der Ausführung nach Fig. 19 endet die Austrittsöffnung7 in einer Höhe H oberhalb der Rohrachse 8 des Haupt-Förderrohrs 3. Das Verhältnis H/DF kann bei der Ausführung nach Fig. 19 im Bereich zwischen 0,2 und 0,8 liegen.

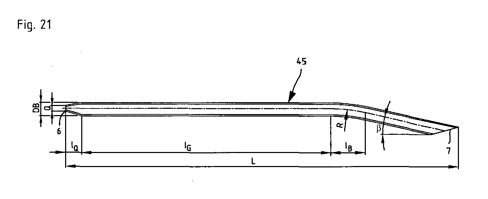

Anhand der Fig. 21 wird nachfolgend eine weitere Ausführung von Bypass-Förderrohrabschnitten 45 für die Fördervorrichtung 1 beschrieben. Komponenten, die denjenigen entsprechen, die vorstehend unter Bezugnahme auf die Fig. 1 bis 20, insbesondere unter Bezugnahme auf die Fig. 19 und 20, bereits erläutert wurden, tragen die gleichen Bezugsziffern und werden nicht nochmals im Einzelnen diskutiert.

Im Unterschied zur Ausführung nach den Fig. 19 und 20 ist der Bypass-Förderrohrabschnitt 45 zwischen dem geraden Bereich mit Länge 1_{G} und der Austrittsöffnung 7 nicht insgesamt gebogen, sondern wiederum unterteilt in einen gebogenen Bereich mit Länge l_{B}, der sich direkt an den eintrittsseitigen geraden Bereich 1_{G} anschließt, und einen sich austrittsseitig an den gebogenen Bereich anschließenden zweiten geraden Bereich bis zur Austrittsöffnung 7. Der Bypass-Förderrohrabschnitt 45 weist in seinem Verlauf zwischen der Eintrittsöffnung 6 und der Austrittsöffnung 7 also zunächst ein gequetschtes Rohrstück mit Länge l_{Q}, dann ein gerades Rohrstück mit Länge l_{G}, dann ein gebogenes Rohrstück mit Länge l_{B} und dann wiederum ein gerades Rohrstück auf. Bei der Ausführung nach Fig. 21 beträgt das Verhältnis l_{G}/L etwa 0,2 bis 0,8. Das Verhältnis l_{B}/L kann beispielsweise im Bereich zwischen 0,2 und 0,6 liegen. Die Länge des austrittsseitigen geraden Bereichs des Bypass-Förderrohrabschnitts 45 liegt zwischen dem 0,5- und dem 2-fachen der Länge l_{B}.

Der Winkel β beträgt beim Bypass-Förderrohrabschnitt 45 10° bis 60°. Das Verhältnis R/L beträgt 0,2 bis 1,5.

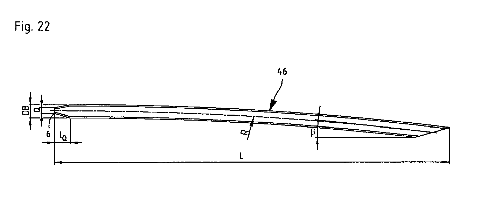

Anhand der Fig. 22 wird nachfolgend eine weitere Ausführung von Bypass-Förderrohrabschnitten 46 für die Fördervorrichtung 1 beschrieben. Komponenten, die denjenigen entsprechen, die vorstehend unter Bezugnahme auf die Fig. 1 bis 20, insbesondere unter Bezugnahme auf die Fig. 19 und 20, bereits erläutert wurden, tragen die gleichen Bezugsziffern und werden nicht nochmals im Einzelnen diskutiert.

Der Bypass-Förderrohrabschnitt 46 ist nach dem eintrittsseitigen gequetschten Bereich mit Länge l_{Q} insgesamt gebogen. Der Winkel β kann zwischen 5° und 60° liegen. Das Verhältnis R/L beträgt etwa 0,5 bis 3.

## Patentansprüche

1. Fördervorrichtung (1) zum pneumatischen Fördern von Schüttgut
- mit einem Haupt-Förderrohr (3),
- mit mehreren innerhalb des Haupt-Förderrohrs (3) hintereinander angeordneten, voneinander separaten Bypass-Förderrohrabschnitten (5; 28; 30; 36; 39 bis 41; 44 bis 46), deren Haupt-Erstreckungsrichtung längs des Haupt-Förderrohrs (3) verläuft, mit jeweils
- - einer Eintrittsöffnung (6) zum Eintritt von Fördergas in den Bypass-Förderrohrabschnitt (5; 28; 30; 36; 39 bis 41; 44 bis 46),
- - einer Austrittsöffnung (7) zum Austritt des Fördergases aus dem Bypass-Förderrohrabschnitt (5; 28; 30; 36; 39 bis 41; 44 bis 46),
**dadurch gekennzeichnet, dass** die Eintrittsöffnung (6) bei verbautem Haupt-Förderrohr (3) in Haupt-Förderrohrbereichen mit horizontaler Verlaufskomponente des Haupt-Förderrohrs (3) in einem Querschnittsabschnitt des Haupt-Förderrohrs (3) angeordnet ist, der oberhalb eines Querschnittsabschnitts des Haupt-Förderrohrs (3) liegt, in dem die Austrittsöffnung (7) angeordnet ist.

2. Fördervorrichtung nach Anspruch 1, **gekennzeichnet durch** einen Bypass-Förderrohrabschnitt (5; 28; 30; 36), dessen Rohrverlauf zumindest benachbart zur Eintrittsöffnung (6) gerade ist und unter einem Winkel (α) zu einer zentralen Längsachse (8) des Haupt-Förderrohrs (3) verläuft.

3. Fördervorrichtung nach Anspruch 1 oder 2, **gekennzeichnet durch** einen Bypass-Förderrohrabschnitt (5; 28; 44; 46), dessen Rohrverlauf benachbart zur Austrittsöffnung (7) auf einen Rohrboden (13) des Haupt-Förderrohrs (3) zu gebogen ist.

4. Fördervorrichtung nach einem der Ansprüche 1 bis 3, **gekennzeichnet durch** einen gemeinsamen Träger (14; 21; 23; 25; 27) für zumindest einige der Bypass-Förderrohrabschnitte (5; 28; 30; 36; 39 bis 41; 44 bis 46), der einerseits an einer Innenwand (15) des Haupt-Förderrohrs (3) und andererseits an den Bypass-Förderrohrabschnitten (5; 28; 30; 36; 39 bis 41; 44 bis 46) festgelegt ist.

5. Fördervorrichtung nach Anspruch 4, **dadurch gekennzeichnet, dass** der Träger (14; 21; 23; 25) einen Querschnitt hat, der sich zu den Bypass-Förderrohrabschnitten (5; 28; 30; 36; 39 bis 41; 44 bis 46) hin öffnet.

6. Fördervorrichtung nach einem der Ansprüche 1 bis 5, **dadurch gekennzeichnet, dass** benachbarte der Bypass-Förderrohrabschnitte (28) einander axial überlappend im Haupt-Förderrohr (3) angeordnet sind.

7. Fördervorrichtung nach einem der Ansprüche 1 bis 6, **gekennzeichnet durch** einen Bypass-Förderrohrabschnitt (30; 36) mit rechteckigem Querschnitt.

8. Fördervorrichtung nach einem der Ansprüche 1 bis 7, **dadurch gekennzeichnet, dass** ein Austritts-Rohrbereich (42) des Bypass-Förderrohrabschnitts (41) mit von einer Bypass-Rohrachse (43) beabstandeter Austrittsöffnung (7) gegenüber einer vertikalen Mittelebene (33) des Haupt-Förderrohrs (3) um einen Schwenkwinkel (δ) verschwenkt angeordnet ist.

9. Förderanlage mit einer Fördervorrichtung (1) nach einem der Ansprüche 1 bis 8.

## Claims

1. Conveyor device (1) for pneumatically conveying bulk material
- with a main conveyor pipe (3),
- with a plurality of bypass conveyor pipe sections (5; 28; 30; 36; 39 to 41; 44 to 46), which are separate from one another, arranged one behind the other within the main conveyor pipe (3) and the main extent direction of which runs along the main conveyor pipe (3), with, in each case,
- - an inlet opening (6) for conveyor gas to enter the bypass conveyor pipe section (5; 28; 30; 36; 39 to 41; 44 to 46),
- - an outlet opening (7) for the conveyor gas to leave the bypass conveyor pipe section (5; 28; 30; 36; 39 to 41; 44 to 46),
**characterised in that** the inlet opening (6), when the main conveyor pipe (3) is installed, in main conveyor pipe segments with a horizontal course component of the main conveyor pipe (3), is arranged in a cross sectional portion of the main conveyor pipe (3), which is located above a cross sectional portion of the main conveyor pipe (3), in which the outlet opening (7) is arranged.

2. Conveyor device according to claim 1, **characterised by** a bypass conveyor pipe section (5; 28; 30; 36), the pipe course of which is straight, at least adjacent to the inlet opening (6), and runs at an angle (α) to a central longitudinal axis (8) of the main conveyor pipe (3).

3. Conveyor device according to claim 1 or 2, **characterised by** a bypass conveyor pipe section (5; 28; 44; 46), the pipe course of which, adjacent to the outlet opening (7), is bent toward a pipe base (13) of the main conveyor pipe (3).

4. Conveyor device according to any one of claims 1 to 3, **characterised by** a common bracket (14; 21; 23; 25; 27) for at least some of the bypass conveyor pipe sections (5; 28; 30; 36; 39 to 41; 44 to 46), which is fixed, on the one hand, to an inner wall (15) of the main conveyor pipe (3) and, on the other hand, to the bypass conveyor pipe sections (5; 28; 30; 36; 39 to 41; 44 to 46).

5. Conveyor device according to claim 4, **characterised in that** the bracket (14; 21; 23; 25) has a cross section which opens toward the bypass conveyor pipe sections (5; 28; 30; 36; 39 to 41; 44 to 46).

6. Conveyor device according to any one of claims 1 to 5, **characterised in that** bypass conveyor pipe sections (28) which are adjacent are arranged overlapping one another axially in the main conveyor pipe (3).

7. Conveyor device according to any one of claims 1 to 6, **characterised by** a bypass conveyor pipe section (30; 36) with a rectangular cross section.

8. Conveyor device according to any one of claims 1 to 7, **characterised in that** an outlet pipe region (42) of the bypass conveyor pipe section (41) with an outlet opening (7), which is spaced apart from a bypass pipe axis (43), is pivotably arranged relative to a vertical centre plane (33) of the main conveyor pipe (3) about a pivoting angle (δ).

9. Conveyor system with a conveyor device (1) according to any one of claims 1 to 8.

## Revendications

1. Dispositif de transport (1) pour le transport pneumatique de produits en vrac
- comprenant un tube de transport principal (3),
- comprenant plusieurs sections de tube de transport-bypass (5 ; 28 ; 30 ; 36 ; 39 à 41 ; 44 à 46), séparées les unes des autres, disposées les unes derrière les autres, à l'intérieur du tube de transport principal (3), dont la direction d'extension principale se déploie le long du tube de transport principal (3), comprenant chacune
- - un orifice d'entrée (6) pour l'introduction d'un gaz de transport dans la section du tube de transport-bypass (5 ; 28 ; 30 ; 36 ; 39 à 41 ; 44 à 46),
- - un orifice de sortie (7) pour la sortie du gaz de transport de la section du tube de transport-bypass (5 ; 28 ; 30 ; 36 ; 39 à 41 ; 44 à 46),
**caractérisé en ce que** l'orifice d'entrée (6) est disposé dans une section transversale du tube de transport principal (3), qui se situe au dessus d'une section transversale du tube de transport principal (3), dans laquelle est arrangé l'orifice de sortie (7), dans le cas d'un tube de transport principal (3) construit composé de zones de tube de transport principal comprenant des composantes de tube de transport principal (3) s'étendant horizontalement.

2. Dispositif de transport selon la revendication 1 **caractérisé par** une section de tube de transport-bypass (5 ; 28 ; 30 ; 36) dont le profil de tube est droit au moins au voisinage de l'orifice d'entrée (6), et fait un angle (α) par rapport à un axe longitudinal central (8) du tube de transport principal (3).

3. Dispositif de transport selon les revendications 1 ou 2 **caractérisé par** une section de tube de transport-bypass (5 ; 28 ; 44 ; 46) dont le profil du tube au voisinage de l'orifice de sortie (7) est replié sur un fond de tube (13) du tube de transport principal (3).

4. Dispositif de transport selon l'une des revendications de 1 à 3 **caractérisé par** un support commun (14 ; 21 ; 23 ; 25 ; 27) pour au moins quelques unes des sections de tube de transport-bypass (5 ; 28 ; 30 ; 36 ; 39 à 41 ; 44 à 46), support qui est fixé, d'une part, sur la paroi interne (15) du tube de transport principal (3), et d'autre part, sur les sections de tube de transport-bypass (5 ; 28 ; 30 ; 36 ; 39 à 41 ; 44 à 46).

5. Dispositif de transport selon la revendication 4 **caractérisé en ce que** le support (14 ; 21 ; 23 ; 28) possède une section transversale qui s'ouvre vers les sections de tube de transport-bypass (5 ; 28 ; 30 ; 36 ; 39 à 41 ; 44 à 46).

6. Dispositif de transport selon l'une des revendications de 1 à 5 **caractérisé en ce que** des sections de tube de transport-bypass (28) voisines sont disposées, se recouvrant axialement les unes les autres, dans le tube de transport principal (3).

7. Dispositif de transport selon l'une des revendications de 1 à 6 **caractérisé par** une section de tube de transport-bypass (30 ; 36) comprenant une section transversale rectangulaire.

8. Dispositif de transport selon l'une des revendications de 1 à 7 **caractérisé en ce qu'**une zone de tube de sortie (42) de la section de tube de transport-bypass (41), comprenant un orifice de sortie (7), espacé d'un axe de tube-bypass (43), est agencée en face d'un plan central (33) vertical du tube de transport principal (3), pivotant autour avec un angle de pivotement (δ).

9. Installation de transport comprenant un dispositif de transport (1) selon l'une des revendications de 1 à 8.
